# EUROPEAN PATENT SPECIFICATION

(11) **EP 2 103 225 B1**
(45) Date of publication and mention of the grant of the patent: **31.10.2012**
(21) Application number: 07832936.4
(22) Date of filing: 03.12.2007
(51) Int. Cl.: A23L 1/231, A23L 1/221

(54) **PROCESS FOR PRODUCING SEASONING**
VERFAHREN ZUR HERSTELLUNG VON WÜRZE
PROCÉDÉ SERVANT À PRODUIRE UN ASSAISONNEMENT

(30) Priority: 04.12.2006 JP 2006326517
(43) Date of publication of application: 23.09.2009
(73) Proprietor: Ajinomoto Co., Inc., Tokyo 104-8315 (JP)
(72) Inventor: KAWAGUCHI, Hirokazu, Kawasaki-shi Kanagawa 210-8681 (JP); SAKAMOTO, Tomohiro, Kawasaki-shi Kanagawa 210-8681 (JP); IZUMI, Masaaki, Kawasaki-shi Kanagawa 210-8681 (JP)
(74) Representative: Strehl Schübel-Hopf & Partner
(86) International application number: PCT/JP2007/073316
(87) International publication number: WO 2008/069173

(56) References cited:
- WO-A1-00/30474
- JP-A- 2001 321 117
- US-A- 3 716 379
- US-A- 3 881 022
- DATABASE WPI Week 199215 Thomson Scientific, London, GB; AN 1992-120666 XP002562329 & JP 04 066069 A (AJINOMOTO KK) 2 March 1992 (1992-03-02)

## Description

### FIELD OF THE INVENTION

### [CROSS-REFERENCE TO RELATED APPLICATIONS]

This invention claims priority based on Japanese Patent Application No. 2006-326517 filed on December 4, 2006.
The present invention relates to a process for producing a seasoning, and more particularly it relates to a process for producing a seasoning having a good roast meat like flavor by using a yeast extract together with a sugar and/or a nucleic acid-related substance and a seasoning produced by said process.

### BACKGROUND OF THE INVENTION

Recently, the demand for a variety of processed foods has been markedly increased, and it is difficult to satisfy diverse demands by simple taste derived from sodium glutamate, nucleic acid-based seasonings, etc. due to premiumisation of preferred tastes and westernization of consumer preference. Thus, a seasoning with complex and natural flavor is wanted.

Heretofore, to satisfy such demands, natural animal extracts with unique and rich flavor, such as beef extract and bone extract, are used. By using these extracts, however, natural flavor is expressed to some extent, but the problem is that these extracts are poor in strength and durability of flavor. In addition, the problems are that these extracts are limited in an amount of supply, are easily contaminated with a microorganism, have difficulty in maintaining uniform quality and are very expensive.

As a result, seasonings with roast meat like flavor, so-called Maillard reaction type, which are obtained using amino acid or protein, and reducing sugar as precursor, have been developed. For example, a flavor additive produced by allowing cysteine and (or) glutathione to react with one of monosaccharides and at least one of other amino acids, and lactate, if required, in water at a high temperature is disclosed in JP Patent Kokoku Publication No. JP-B-42-22194 (Patent Document 1). A method for producing a canned food with a strong meat like flavor comprising steps of adding cystine, cysteine, and (or) glutathione, monosaccharide and one of amino acids and reducing substances (such as ascorbic acid and erythorbic acid) and heating then the mixture, is disclosed in JP Patent Kokoku Publication No. JP-B-49-35149 (Patent Document 2) and JP Patent Kokai Publication No. JP-A-49-109561 (Patent Document 3).

There are many examples of using yeast extract as amino acid or protein source. Heretofore, yeast extract is produced and used for replacement of meat extract centered on Europe and America. In case of using yeast extract as it is, problem of occurrence of unpleasant taste and odor derived from yeast is pointed out.

As a means of obtaining a roast meat-flavor replacement product by using a yeast as a raw material, a method comprising steps of mixing a nucleic acid-related substance and animal fat and oil with a cold water extract of yeast and heating then the mixture in JP Patent Kokoku Publication No. JP-B-43-15799 (Patent Document 4), and a method for producing a seasoning comprising steps of adding a sugar and an amino acid, if required, to a yeast extract containing a sulfur-containing compound such as glutathione in a predetermined amount and heating then the mixture in JP Patent Kokai Publication No. JP-A-4-66069 (Patent Document 5) are disclosed.

[Patent Document 1] JP Patent Kokoku Publication No. JP-B-42-22194
[Patent Document 2] JP Patent Kokoku Publication No. JP-B-49-35149
[Patent Document 3] JP Patent Kokai Publication No. JP-A-49-109561
[Patent Document 4] JP Patent Kokoku Publication No. JP-B-43-15799
[Patent Document 5] JP Patent Kokai Publication No. JP-A-4-66069

US-A-3881022 discloses a method for producing a seasoning in which a yeast extract is mixed with a saccharide in an aqueous solution to prepare a mixture, which is then heated for 40 minutes at 90 °C at a pH of 6.2, before being adjusted to a pH of 5.0 without cooling.

DATABASE WPI Week 199215 Thomson Scientific, London, GB; AN 1992-120666 XP002562329, & JP 4 066069 A (Ajinomoto KK) 2 March 1992 (1992-03-02) discloses a roast meat flavoured seasoning produced by heating an extract containing glutathione, cysteinglutamyl cysteine and optionally saccharide and aminoacid in the absence of fat.

### DISCLOSURE OF THE INVENTION

### PROBLEMS TO BE SOLVED BY THE INVENTION

However, there are problems that the seasonings obtained by the conventional methods have a poor strength and durability of flavor, have an unpleasant odor derived from yeast and burnt odor derived from sugar, and have poor stability. As a result, further improvement is required. Thus, it is an object of the present invention to provide a process for a seasoning with an excellent roast meat like flavor in which the above-mentioned problems have been solved.

### MEANS TO SOLVE THE PROBLEMS

In view of the above problems, the present inventors made intensive studies in order to solve these problems, and as a result, they found that a seasoning having an excellent roast meat like flavor without an unpleasant odor derived from yeast and burnt odor derived from sugar is obtained by adding saccharide and/or a nucleic acid-related substance to a yeast extract containing at least one of cysteine, γ-glutamylcysteine, and salts or hydrates thereof in a ratio of 1% by mass or more based on the solid content and then heating the resultant mixture, and thus the present invention has been completed.

The present invention provides the following.
[1] A process for producing a seasoning characterized by comprising:
   mixing a yeast extract containing at least one of cysteine, γ-glutamylcysteine, and salts or hydrates thereof in a ratio of 1% by mass or more based on the solid content with saccharide and/or a nucleic acid-related substance in an aqueous solution to prepare a mixture; and
   heating the mixture,
   characterized in that the heating is carried out at a pH condition of pH 3.5 to 5.5 at 80 to 130 °C for 0.5 to 8 hours in a first stage and at a pH condition of pH 6.0 to 8.0 at 80 to 130 °C for 0.5 to 8 hours in a second stage.
[2] The process of [1], wherein the saccharide is one or more selected from the group consisting of ribose, xylose, arabinose, glucose, fructose, sucrose, maltose, and lactose.
[3] The process of [1] or [2], wherein the nucleic acid-related substance is previously heated in an aqueous solution and thereafter added to the yeast extract.
[4] The process of any one of [1] to [3], wherein the nucleic acid-related substance is one or more 5'-nucleotides selected from the group consisting of 5'-inosinic acid, 5'-guanylic acid, 5'-uridylic acid, 5'-cytidylic acid, 5'-adenylic acid, and salts or hydrates thereof.
[5] A seasoning or a food stuff comprised hereof produced by the process of any one of [1] to [4].
[6] The seasoning or a food stuff comprised hereof of [5], comprising at least 2,4-dimethylthiazole, 2,4,5-trimethylthiazole, and 5-ethyl-2,4-dimethylthiazole as flavor ingredient.

### MERITORIOUS EFFECTS OF THE INVENTION

According to the process of the present invention, the seasoning having an excellent roast meat like flavor without an unpleasant odor derived from yeast and burnt odor derived from saccharide as compared to the conventional seasonings can be easily produced. It is thought that, in the seasoning of the present invention, the characteristic roast meat like flavor as described above is produced by both of an increase in amount of thiazoles produced by the heating under two different pH conditions and a combination with the other ingredients.

### PREFERRED MODES FOR CARRYING OUT

Hereinafter, the present invention will be described in detail. The yeast extract used in the process of the present invention is not particularly limited, and it may be a yeast extract prepared by using a yeast for foods or food additives. For example, the yeast extract can be produced by baker's yeast, brewer's yeast, torula yeast and the like. The yeast extract used in the present invention can be prepared by the steps of obtaining a yeast containing a sulfur-containing compound, such as cysteine and γ-glutamylcysteine (γ-GC) at a high concentration by modifying a breeding or culture method, and then subjecting the yeast thus obtained to extraction or autodigestion. For example, a method for producing a yeast extract containing cysteine in high concentration is disclosed in JP Patent Kokai Publication No. JP-A-2004-290183. This method comprises concentrating a yeast extract containing γ-GC while maintaining the temperature at a low temperature of 60 °C or less to provide a concentrate having a solid concentration of at least 10% and then subjecting the concentrate, preferably in a state of an aqueous solution where the existing amount of a reducing sugar is not more than 1%, under an acidic condition, preferably at pH 3.5 to 6 to heat treatment retained at 70 to 130 °C which is higher than the temperature of the above-mentioned concentrate, threby increasing the conversion rate of γ-GC to cysteine. A method for producing a yeast extract containing γ-GC at a high concentration is disclosed in JP Patent Kokai Publication No. JP-A-2004-201677, and in addition, a method for producing a highly glutathione-containing yeast extract is disclosed in JP Patent Kokai Publication No. JP-A-2004-283125.

In addition to the yeast extracts obtained by the above-mentioned methods, yeast extract prepared by adding a sulfur-containing compound to a yeast extract may be used. The sulfur-containing compound is not particularly limited, and it may be a sulfur-containing compound generally contained in food materials. Examples of the sulfur-containing compound include sulfur-containing amino acids such as cysteine, cystine, methionine, and taurine; sulfur-containing peptides such as glutathione, γ-glutamylcysteine, and cystenylglycine; and sulfur-containing vitamins such as thiamine. In particular, a sulfur-containing compound having sulfhydryl group is particularly preferable. In the present invention, the yeast extract contains at least cysteine, γ-glutamylcysteine, and salts and/or hydrates thereof. For example, cysteine may be in hydrochloride or hydrate form, and disulfide such as cystine is reduced to form sulfhydryl group. These sulfur-containing compounds can be previously added to yeast extract, alone or in combination of two or more, or these sulfur-containing compounds together with yeast extract are mixed with saccharide and/or a nucleic acid-related substance to prepare the seasoning of the present invention.

A seasoning having a good quality and excellent stability with roast meat like flavor can be obtained by adding saccharide and/or a nucleic acid-related substance and further water for dissolving, if required, to the above-mentioned yeast extract, followed by heating the resulting mixture under two different pH conditions of pH 3.5 to 5.5 and pH 6.0 to 8.0, respectively at 80 to 130 °C, for 0.5 to 8 hours. A preferred embodiment is the selection of the two-stage heat-treatment process under two different pH conditions as described above. However, in an embodiment, at least a step with the heat-treatment under two different pH conditions may be contained, and, for example, the pH condition may be changed in three stages or more while continuously heating. As a matter of course, when the temperature is decreased, heat treatment for a long time is required. On the contrary, when the temperature is elevated, the time becomes short. In addition, when thermal reaction proceeds, pH is gradually decreased, and as a result, maximum decrease of pH by 1 or so may occur.

For the saccharide, reducing monosaccharides are preferably selected. The saccharide is not particularly limited but they can be properly selected depending on sort of objective flavor. Examples of the saccharide include monosaccharides such as ribose, xylose, arabinose, glucose, and fructose; disaccharides such as sucrose, maltose, and lactose. The mixing ratio of saccharide is not particularly limited. For example, the mixing ratio of saccharide is in the range of 0.01 to 50 parts by weight based on 100 parts by weight of yeast extract.

Examples of the nucleic acid-related substance include 5'-nucleotides such as sodium 5'-inosinate, sodium 5'-guanylate, sodium 5'-uridilate, sodium 5'-cytidilate, and sodium 5'-adenylate. The nucleic acid-related substance may be in the form of acids (free forms), neutralized salts, or hydrates. It is well-known that a nucleic acid-related substance contains ribose in the molecule, and is partially degraded into ribose by heating in a solution. That is, it has a similar function as saccharides. The mixing ratio of the nucleic acid-related substance is not particularly limited. For example, the mixing ratio of the nucleic acid-related substance is in the range of 0.01 to 50 parts by weight based on 100 parts by weight of yeast extract.

The heat treatment in the process of the present invention can be carried out in water, an organic solvent, or a mixture thereof, and it is preferably carried out in an aqueous solution. The water content in the thermal reaction is not particularly limited. The water content is preferably not less than 40 parts by weight based on 100 parts by weight of total reactants.

In a typical embodiment, a roast meat like flavor of the seasoning obtained can be remarkably increased by carrying out adjustment of pH of the reaction mixture solution in two stages with heating. In addition, the quality and strength of flavor can be controlled by changing a combination of pH values in first stage and second stage. Now, it has been found that a roast meat like flavor tends to become stronger when the pH value is adjusted to 6.0 to 8.0 after pH adjustment to 3.5 to 5.5, whereas a complex aroma tends to become stronger when the pH value is adjusted to 3.5 to 5.5 after pH adjustment to 6.0 to 8.0. Thus, the pH condition can be selected depending on the desired form of seasoning.

During the thermal reaction or after completion of the thermal reaction, an animal or plant extract, a hydrolyzed animal or vegetable protein and the like may be added, if required. Examples of the animal or plant extract include plant extracts such as vegetable extract and spice extract; and animal extracts such as beef extract, pork extract, chicken extract, dried bonito extract, bonito extract, shrimp extract, crab extract, and short-necked clam extract.

Examples of the hydrolyzed animal or vegetable protein include hydrolyzed proteins prepared from animal or vegetable protein with an acid, an alkali or a protease. Specific examples thereof include hydrolyzed proteins (HVP) such as hydrolyzed soy protein and hydrolyzed wheat protein; and hydrolyzed proteins (HAP) such as hydrolyzed fish and shellfish protein.

For the purpose of imparting a preservative and a bacteriostatic property, sodium chloride, alcohol and the like may be added. In addition, a natural flavor and a spice can be contained as a roast meat like flavor-enhancing or roast meat like flavor-improving agent in the seasoning of the present invention to enhance a preference.

The seasoning can be used in the form of liquid, emulsion, paste and the like as a matter of course, and also it can be used in the form of powder or granule, for example, with addition of gum arabic, dextrin and the like. As a powderization method, there are a spray drying method, a freeze drying method, a vacuum drum drying method and the like. As a granulation method, there are an extrusion granulation, tumbling granulation and the like.

It is presumed that the seasoning of the present invention has a roast meat like flavor because thiazoles are produced in the thermal reaction. In this connection, examples of the thiazoles include thiazole, 4-methylthiazole, 2,4-dimethylthiazole, 2,5-dimethylthiazole, 4,5-dimethylthiazole, 2,4,5-trimethylthiazole, 5-ethyl-2,4-dimethylthiazole, 2-isobutylthiazole, 2-methyl-5-methoxythiazole, 2-isopropyl-4-methylthiazole, and 5-ethyl-4-methylthiazole. In particular, three kinds of thiazoles, 2,4-dimethylthiazole, 2,4,5-trimethylthiazole, and 5-ethyl-2,4-dimethylthiazole, are preferably contained. When a seasoning is prepared by the process of the present invention, these three kinds of thiazoles are produced.

These various thiazoles can be quantified by headspace-GC-MS (gas chromatography-mass spectrometry) using a purge and trap method.

The cooking flavor of the present invention can be applied to wide field as an excellent and unique cooking flavor. For example, it is useful as a cooking flavor for wide foods such as soups, seasonings, processed foods of meat, chicken, fish and shellfish and the like, powdered foods to be sprinkled over rice, instant foods, snack foods, canned foods and the other foods.

### EXAMPLES

The invention is now described specifically in the following Examples and Comparative Examples.

### [Comparative Example 1] one-stage heat treatment under sole pH condition

0.2g of glucose and 1.0g of xylose were mixed with 6.7g of yeast extract powder containing 4.5% by mass of cysteine based on the solid content (manufactured by Ajinomoto Co.), and the mixture thus obtained was dissolved in 11.7g of water. Subsequently, the resultant solution was adjusted to pH 7.0 or 5.0 with a sodium hydroxide solution, followed by heating at 95 °C for 7 hours in oil bath. After heating, the solution was immediately cooled to obtain a seasoning. The seasoning prepared through pH adjustment to 7.0 was referred to as Comparative Example 1-1, and the seasoning prepared through pH adjustment to 5.0 was referred to as Comparative Example 1-2.

### [Comparative Example 2] two-stage heat treatment in case of using a general-purpose yeast extract

0.2g of glucose and 1.0g of xylose were mixed with 7.3 g of commercially available baker's yeast extract powder (which does not contain cysteine), Springer 0203/0-PW-L (manufactured by Bio Springer Co.), and the mixture thus obtained was dissolved in 11.7g of water. Subsequently, the resultant solution was adjusted to pH 5.0 with a sodium hydroxide solution, followed by heating at 95 °C for 5 hours in oil bath. After heating, the solution was adjusted to pH 7.0, followed by heating at 95 °C for 2 hours in oil bath. After heating, the solution was immediately cooled to obtain a seasoning. The seasoning thus obtained was referred to as Comparative Example 2.

### [Example 1]

0.2g of glucose and 1.0g of xylose were mixed with 6.7g of yeast extract powder containing 4.5% by mass of cysteine based on the solid content (manufactured by Ajinomoto Co.), and the mixture thus obtained was dissolved in 11.7g of water. Subsequently, the resultant solution was adjusted to pH 5.0 with a sodium hydroxide solution, followed by heating at 95 °C for 5 hours in oil bath. After heating, the solution was adjusted to pH 7.0, followed by heating at 95 °C for 2 hours in oil bath. After heating, the solution was immediately cooled to obtain a seasoning.

To commercially available soy sauce based-noodle sauce (manufactured by Toyo Suisan Kaisha, Ltd.) was added the seasoning of the present invention or the seasoning of the Comparative Example so as to be 1.0 % by mass. Subsequently, according to the method described in packaging, noodle was experimentally made to carry out sensory evaluation.

The sensory evaluation was carried out by evaluating comparatively and sensorily each sample and then selecting a sample having the strongest roast meat aroma or a preferable feeling using 12 panel persons. The results will be shown in Table 1. The numerals in the Table represent the number of panel persons (the same shall apply hereinafter).

**[Table 1]**

| | non-addition | Seasoning in Example 1 | Comparative Example 1-1 | Comparative Example 1-2 | Comparative Example 2 |
|---|---|---|---|---|---|
| Roast meat aroma is strong | 0 | 12 | 0 | 0 | 0 |
| Total flavor is preferable | 0 | 12 | 0 | 0 | 0 |

### [Example 2]

0.2g of glucose and 1.0g of xylose were mixed with 6.7g of yeast extract powder containing 4.5% by mass of cysteine based on the solid content (manufactured by Ajinomoto Co.), and the mixture thus obtained was dissolved in 11.7g of water. Subsequently, the resultant solution was adjusted to pH 4.6 with a sodium hydroxide solution, followed by heating at 95 °C for 5 hours in oil bath. After heating, the solution was adjusted to pH 6.6, followed by heating at 95 °C for 2 hours in oil bath. After heating, the solution was immediately cooled to obtain a seasoning.

To 270g-canned demiglace sauce (manufactured by Heinz Japan Ltd.) was added the seasoning of the present invention or the seasoning of the Comparative Example so as to be 0.1 % by mass. Subsequently, the mixture was diluted with two times by weight of hot water per the demiglace sauce to carry out sensory evaluation.

The sensory evaluation was carried out according to the description of Example 1. The results are shown in Table 2.

**[Table 2]**

| | non-addition | Seasoning in Example 2 | Comparative Example 1-1 | Comparative Example 1-2 | Comparative Example 2 |
|---|---|---|---|---|---|
| Roast meat aroma is strong | 0 | 11 | 1 | 0 | 0 |
| Total flavor is preferable | 0 | 12 | 0 | 0 | 0 |

### [Example 3]

0.2g of fructose and 1.0g of xylose were mixed with 6.7g of yeast extract powder containing 4.5% by mass of cysteine based on the solid content (manufactured by Ajinomoto Co.), and the mixture thus obtained was dissolved in 11.7g of water. Subsequently, the resultant solution was adjusted to pH 7.5 with a sodium hydroxide solution, followed by heating at 95 °C for 3 hours in oil bath. After heating, the solution was adjusted to pH 4.5, followed by heating at 95 °C for 2 hours in oil bath. After heating, the solution was immediately cooled to obtain the seasoning.

To Chinese style seasoning (manufactured by Ajinomoto Co.) was added the seasoning of the present invention or the seasoning of the Comparative Example so as to be 1.0 % by mass. Subsequently, the mixture was diluted with 120 parts by weight of hot water per [part by weight of] the Chinese style seasoning to carry out sensory evaluation.

The sensory evaluation was carried out according to the description of Example 1. The results are shown in Table 3.

**[Table 3]**

| | non-addition | Seasoning in Example 3 | Comparative Example 1-1 | Comparative Example 1-2 | Comparative Example 2 |
|---|---|---|---|---|---|
| Roast meat aroma is strong | 0 | 12 | 0 | 0 | 0 |
| Total flavor is preferable | 0 | 8 | 4 | 0 | 0 |

### [Example 4]

0.2g of glucose and 1.0g of xylose were mixed with 6.7g of yeast extract powder containing 4.5% by mass of cysteine based on the solid content (manufactured by Ajinomoto Co.), and the mixture thus obtained was dissolved in 11.7g of water. Subsequently, the resultant solution was adjusted to pH 4.6 with a sodium hydroxide solution, followed by heating at 95 °C for 5 hours in oil bath. After heating, the solution was adjusted to pH 6.6, followed by heating at 95 °C for 2 hours in oil bath. After heating, the solution was immediately cooled to obtain a seasoning.

To Japanese style seasoning (manufactured by Ajinomoto Co.) was added the seasoning of the present invention or the seasoning of the Comparative Example so as to be 0.5 % by mass. Subsequently, the mixture was diluted with 150 parts by weight of hot water per [part by weight of] the Japanese style seasoning to carry out sensory evaluation.

The sensory evaluation was carried out by 14 panel persons according to the description of Example 1. The results are shown in Table 4.

**[Table 4]**

| | non-addition | Seasoning in Example 4 | Comparative Example 1-1 | Comparative Example 1-2 | Comparative Example 2 |
|---|---|---|---|---|---|
| Roast meat aroma is strong | 0 | 10 | 1 | 3 | 0 |
| Total flavor is preferable | 0 | 11 | 3 | 0 | 0 |

### [Example 5]

To 1.8g of disodium 5'-inosinate 7.5-hydrate was added 2.6g of water and 0.4g of concentrated hydrochloric acid, followed by heating at 95 °C for 10 hours. Subsequently, the mixture thus obtained was mixed with 6.7g of yeast extract powder containing 4.5% by mass of cysteine based on the solid content (manufactured by Ajinomoto Co.) and 0.6g of glucose, and the mixture thus obtained was dissolved in 11.7g of water. Subsequently, the resultant solution was adjusted to pH 4.5 with a sodium hydroxide solution, followed by heating at 95 °C for 5 hours in oil bath. After heating, the solution was adjusted to pH 7.5, followed by heating at 95 °C for 7 hours in oil bath. After heating, the solution was immediately cooled to obtain a seasoning.

To 270g-canned demiglace sauce (manufactured by Heinz Japan Ltd.) was added the seasoning of the present invention or the seasoning of the Comparative Example so as to be 0.1 % by mass. Subsequently, the mixture was diluted with two times weight of hot water per the demiglace sauce. When sensory evaluation was carried out, the seasoning produced an equal effect to the seasoning of Example 1 and had a stronger roast meat aroma.

The sensory evaluation was carried out by 12 panel persons according to the description of Example 1. The results are shown in Table 5.

**[Table 5]**

| | non-addition | Seasoning in Example 5 | Comparative Example 1-1 | Comparative Example 1-2 | Comparative Example 2 |
|---|---|---|---|---|---|
| Roast meat aroma is strong | 0 | 9 | 2 | 1 | 0 |
| Total flavor is preferable | 0 | 9 | 1 | 2 | 0 |

### [Example 6]

A method for analysis of thiazoles is shown as follows. The seasonings prepared by the processes shown in the Example or Comparative Examples were diluted with up to appropriate parts of water. The dilution thus obtained was heated at 60 °C and Helium gas was purged at a flow rate of 40 mL/min. for 20 minutes to allow flavor ingredients to be adsorbed onto TENAX-TA resin. The flavor ingredients adsorbed was introduced into GC-MS.

The amounts of 2,4-dimethylthiazole, 2,4,5-trimethylthiazole, and 5-ethyl-2,4-dimethylthiazole, which are contained in the sample of Example 1 and the samples of Comparative Examples 1-1 and 1-2, are shown in Table 6. In addition, analysis values of two commercially available meat flavor like seasonings (A= Givaudan Japan K.K., B= Symrise Inc.) are shown in the same Table. The numerals in the Table represent the amount (ppm) of thiazoles based on the solid content.

**[Table 6]**

| | 2,4-dimethylthiazole | 2,4,5-trimethylthiazole | 5-ethyl-2,4-dimethylthiazole |
|---|---|---|---|
| Example 1 | 0.06 | 0.06 | 0.06 |
| Comparative Example 1-1 | 0.06 | 0.05 | N.D |
| Comparative Example 1-2 | 0.02 | 0.02 | N.D |
| Comparative Example 2 | N.D | N.D | N.D |
| A | N.D | N.D | N.D |
| B | N.D | N.D | N.D |

| | | | |
|---|---|---|---|
| N.D.=not more than the detection limit (undetectable) (<0.01ppm) | | | |

## Claims

1. A process for producing a seasoning **characterized by** comprising:
mixing a yeast extract containing at least one of cysteine, γ-glutamylcysteine, and salts or hydrates thereof in a ratio of 1% by mass or more based on the solid content with saccharide and/or a nucleic acid-related substance in an aqueous solution to prepare a mixture; and
heating the mixture,
**characterized in that** the heating is carried out at a pH condition of pH 3.5 to 5.5 at 80 to 130 °C for 0.5 to 8 hours in a first stage and at a pH condition of pH 6.0 to 8.0 at 80 to 130 °C for 0.5 to 8 hours in a second stage.

2. The process of claim 1, wherein the saccharide is one or more selected from the group consisting of ribose, xylose, arabinose, glucose, fructose, sucrose, maltose, and lactose.

3. The process of claim 1 or 2, wherein the nucleic acid-related substance is previously heated in an aqueous solution and thereafter added to the yeast extract.

4. The process of any one of claims 1 to 3, wherein the nucleic acid-related substance is one or more 5'-nucleotides selected from the group consisting of 5'-inosinic acid, 5'-guanylic acid, 5'-uridylic acid, 5'-cytidylic acid, 5'-adenylic acid, and salts or hydrates thereof.

5. A seasoning or a food stuff comprised hereof produced by the process of any one of claims 1 to 4.

6. The seasoning or a food stuff comprised hereof of claim 5, comprising at least 2,4-dimethylthiazole, 2,4,5-trimethylthiazole, and 5-ethyl-2,4-dimethylthiazole as flavor ingredients

## Patentansprüche

1. Verfahren zum Herstellen eines Würzmittels, **dadurch gekennzeichnet, dass** es umfasst:
das Mischen eines Hefeextrakts, der mindestens ein Mitglied der aus Cystein, γ-Glutamylcystein und Salzen oder Hydraten davon bestehenden Gruppe in einem Anteil von 1 Massen-% oder mehr, bezogen auf den Feststoffgehalt, enthält, mit Saccharid und/oder einer Nucleinsäure-verwandten Substanz in einer wässrigen Lösung zum Herstellen eines Gemisches; und das Erwärmen des Gemisches,
**dadurch gekennzeichnet, dass** das Erwärmen bei einer pH-Bedingung von pH 3,5 bis 5,5 bei 80 bis 130 °C während 0,5 bis 8 Stunden in einer ersten Stufe und bei einer pH-Bedingung von pH 6,0 bis 8,0 bei 80 bis 130 °C während 0,5 bis 8 Stunden in einer zweiten Stufe durchgeführt wird.

2. Verfahren nach Anspruch 1, wobei das Saccharid ein oder mehrere Mitglieder der Gruppe ist, die aus Ribose, Xylose, Arabinose, Glucose, Fructose, Saccharose, Maltose und Lactose besteht.

3. Verfahren nach Anspruch 1 oder 2, wobei die Nucleinsäure-verwandte Substanz vorher in einer wässrigen Lösung erwärmt wird und dann zu dem Hefeextrakt gegeben wird.

4. Verfahren nach einem der Ansprüche 1 bis 3, wobei die Nucleinsäure-verwandte Substanz ein oder mehrere 5'-Nucleotide ist, die aus der Gruppe ausgewählt sind, die aus 5'-Inosinsäure, 5'-Guanylsäure, 5'-Uridylsäure, 5'-Cytidylsäure, 5'-Adenylsäure und Salzen oder Hydraten davon besteht.

5. Würzmittel oder dieses enthaltendes Nahrungsmittelmaterial, hergestellt durch das Verfahren nach einem der Ansprüche 1 bis 4.

6. Würzmittel oder dieses enthaltendes Nahrungsmittelmaterial nach Anspruch 5, welches mindestens 2,4-Dimethylthiazol, 2,4,5-Trimethylthiazol und 5-Ethyl-2,4-dimethylthiazol als Aromabestandteile enthält.

## Revendications

1. Procédé de production d'un assaisonnement, **caractérisé en ce qu'**il comprend :
le mélange d'un extrait de levure contenant au moins l'un parmi la cystéine, la γ-glutamylcystéine, et des sels ou hydrates de celles-ci dans un rapport de 1 % en masse ou plus rapporté à la teneur en matière solide avec un saccharide et/ou une substance acide nucléique-liée dans une solution aqueuse pour préparer un mélange ; et
le chauffage du mélange,
**caractérisé en ce que** le chauffage est réalisé dans un état de pH de pH 3,5 à 5,5 à de 80 à 130°C pendant de 0,5 à 8 heures dans une première étape et dans un état de pH de pH de 6,0 à 8,0 à de 80 à 130°C pendant de 0,5 à 8 h dans une seconde étape.

2. Procédé selon la revendication 1, dans lequel le saccharide est l'un ou plusieurs choisis dans le groupe constitué de ribose, de xylose, d'arabinose, de glucose, de fructose, de saccharose, de maltose et de lactose.

3. Procédé selon la revendication 1 ou 2, dans lequel la substance acide nucléique-liée est préalablement chauffée dans une solution aqueuse et ajoutée après cela à l'extrait de levure.

4. Procédé selon l'une quelconque des revendications 1 à 3, dans lequel la substance acide nucléique-liée est un ou plusieurs 5'-nucléotides choisis dans le groupe constitué de l'acide 5'-inosinique, de l'acide 5'-guanylique, de l'acide 5'-uridylique, de l'acide 5'-cytidylique, de l'acide 5'-adénylique, et de sels ou hydrates de ceux-ci.

5. Assaisonnement ou matière alimentaire constitué de celui-ci produit par le procédé selon l'une quelconque des revendications 1 à 4.

6. Assaisonnement ou matière alimentaire constitué de celui-ci selon la revendication 5, comprenant au moins du 2,4-diméthylthiazole, du 2,4,5-triméthylthiazole, et du 5-éthyl-2,4-diméthylthiazole comme ingrédients d'arômes.
